Europäisches Patentamt

European Patent Office

Office européen des brevets

(11) Publication number: **0 217 189**
**B1**

# EUROPEAN PATENT SPECIFICATION

(45) Date of publication of the patent specification:
27.12.89

(51) Int. Cl.⁴: **F 16 L 58/10,** F 16 L 58/02, F 16 L 55/16

(21) Application number: 86112528.4

(22) Date of filing: 10.09.86

(54) Lined pipe, lining and method of a lining pipe.

(30) Priority: 17.09.85 GB 8522992
15.06.86 US 896715

(43) Date of publication of application:
08.04.87 Bulletin 87/15

(45) Publication of the grant of the patent:
27.12.89 Bulletin 89/52

(84) Designated Contracting States:
AT BE CH DE FR GB IT LI LU NL SE

(56) References cited:
EP-A-0 155 406
EP-A-0 157 948
AT-B-352 489
DE-A-2 362 784
US-A-4 064 211

(73) Proprietor: INSITUFORM GROUP LIMITED, 3/4 Hill Street, Douglas Isle of Man (GB)

(72) Inventor: Driver, Franklin Thomas, 6613 Knight Arnold Road, Memphis, Tennessee 38115 (US)

(74) Representative: Denmark, James, c/o Bailey, Walsh & Co. 5 York Place, Leeds LS1 2SD Yorkshire (GB)

## Description

The present invention relates to method and apparatus for preventing escape or travel of fluid along spaces that may form between a pipe and a lining that is applied to the interior of the pipe.

Pipelines and passageways need repair or replacement as they age. Replacement, particularly of underground pipelines and passageways, is extremely costly. Accordingly it is becoming increasingly common to provide linings for such pipelines and passageways while those structures remain in place. Various types of lining have been provided, some flexible and some rigid and some flexible when applied but rigidifying after application, but in all cases it is preferable that the lining be of a nature such that it closely conforms to and engages the inner surface of the pipeline or passageway. With linings that are flexible either permanently or initially, that conformity to and engagement with the internal surface of the pipe (the term "pipe" is here used generically to include all types of pipelines or passageways) is accomplished by internally pressurizing the lining.

In one widely practiced method of lining pipes, certain aspects of which are disclosed in Wood patent US-A-4 064 211 of December 20, 1977 entitled "Lining of passageways", flexible lining tubes are utilized. These tubes comprise a resin-absorbent material which serves to soak up a curable synthetic resin. The resin-impregnated tube, initially flexible, is inserted into the pipe and then forced radially outwardly into engagement with the internal pipe surface by internally pressurizing the flexible tube by means of pneumatic or hydraulic pressure, with or without providing a vacuum in the initial space between the tube and the pipe. After that internal pressurization, the resin with which the tube is impregnated cures, thus producing a rigid lining within the pipe which ideally closely conforms to the entire inner surface of the pipe. However, in practice it has been found that the lining, after the internal pressure is relieved, can shrink away from the pipe, creating a small annular gap, perhaps only a few millimeters wide in a pipe having a one meter diameter, that gap sometimes occurring over all or a substantial portion of the length of the lined pipe. This annular gap does not cause concern in pipes such as sewer pipes where the fluid passing through the pipe is a liquid and is at relatively low pressure, but in the case of a pressure pipe, such as a gas pipeline, the annular gap, when it forms, constitutes a serious problem in that the gas can gain access to and then travel along the axial length of that gap and escape, thus rendering the lining to a large extent ineffective.

One attempt to solve this problem has been to provide some sort of adhesive seal between the lining and the inner surface of the pipe, but this usually requires thorough cleaning of the pipe surface, which presents practical problems particularly with underground pipes, and even with cleaning when a pipe on the order of 200 meters or more long is involved it is very difficult to ensure that the seal between the lining and the pipe surface will be effective along the entire length of the pipe. Moreover, when the lining is adhesively attached to a pipe with a crack in it and the pipe subsequently shifts at the crack the adhesively secured lining tends to break, whereas when the lining is not adhesively secured it will not break under those circumstances because its distortion is spread over a significant length of the lining rather than being concentrated at the place where the shift occurs.

It is the prime object of the present invention to prevent the passage of fluid through spaces between a pipe and its lining which is effective, inexpensive and readily accomplished.

It is a further object of the present invention to accomplish the aforementioned results by means particularly well adapted for use in connection with the lining of pipes by flexible linings which are pressed into engagement with the internal pipe surface and cured, after which the pressure is released.

It is a further object of the present invention to provide an effective seal between pipes and pipe linings to prevent, for example, the tracking of gas along the annular gap between a lining which has shrunk away from the inner surface of the pipe to create an annular gap between the lining and the pipe, as well as to prevent external fluids, such as ground water, from tracking along that gap and ultimately reaching the interior of the lining.

The present invention relates to a lined pipe as disclosed in claim 1 and to a lining for a pipe as disclosed in claim 11.

In accordance with the invention, sealing rings are located at spaced intervals along the length of the pipe, either prior to or during the application of the lining to the pipe. The rings comprise a resiliently deformable material so that they will compress when an initially flexible lining is used and when that lining is pressed against the inner surface of the pipe and will recover incompletely in the event of shrinkage of the lining away from the pipe, thereby to maintain a circumferential seal between the pipe and the lining, the circumferential seals produced by the plurality of axially spaced sealing rings thus preventing fluid from moving axially along the length of the pipe for any distance greater than the axial spacing between the sealing rings. Hence any fluid which enters a given annular gap will be trapped there and cannot escape. The sealing rings, which may be of a rubbery elastomeric material, are designed so that they will be compressed, when the lining is initially applied, by an amount greater than the amount which they will recover during the expected shrinkage of the lining. The rings may take any suitable cross-section, such as circular, and may be provided with sealing ribs to form a labyrinth seal which will deform more than the main body of the ring.

It will be noted that while the present invention is particularly suitable for use with initially flexible but subsequently rigidified linings such as those disclosed in patent US-A-4 064 211, it has applicability in connection with flexible linings of other types and with substantially rigid linings which are pressed into position.

To the accomplishment of the above, and to such other objects as may hereinafter appear, the present invention relates also to a method for providing seals between a pipe and a pipe lining as defined in the appended claim 12:

Fig. 1 is a diagrammatic cross-sectional view illustrating the principle of the pipe lining disclosed in patent US-A-4 064 211, utilizing a flexible lining which is pressed into engagement with the pipe inner surface and cured, typical sealing rings being shown in position within the pipe prior to the insertion of the lining;

Fig. 2 is a cross-sectional view showing the flexible lining tube which is used in the method illustrated in Fig. 1;

Fig. 3 is a cross-sectional view illustrating the relationship between the lining, the pipe inner surface and a sealing ring before internal pressure is applied to the lining;

Fig. 3A is a view similar to Fig. 3 but showing the relationship of the parts after pressure has been applied inside the lining so as to force the lining against the inner surface of the pipe;

Fig. 4 is a view similar to Fig. 3A but showing the relationship of the parts after the lining has solidified and has shrunk slightly away from the pipe inner surface;

Figs. 5, 6 and 7 are cross-sectional views of alternative sealing rings;

Fig. 8 is a view similar to Fig. 2 but with respect to a lining into which the sealing rings are incorporated before the lining is applied; and

Fig. 9 is a diagrammatic side elevational view of a length of the lining of Fig. 7.

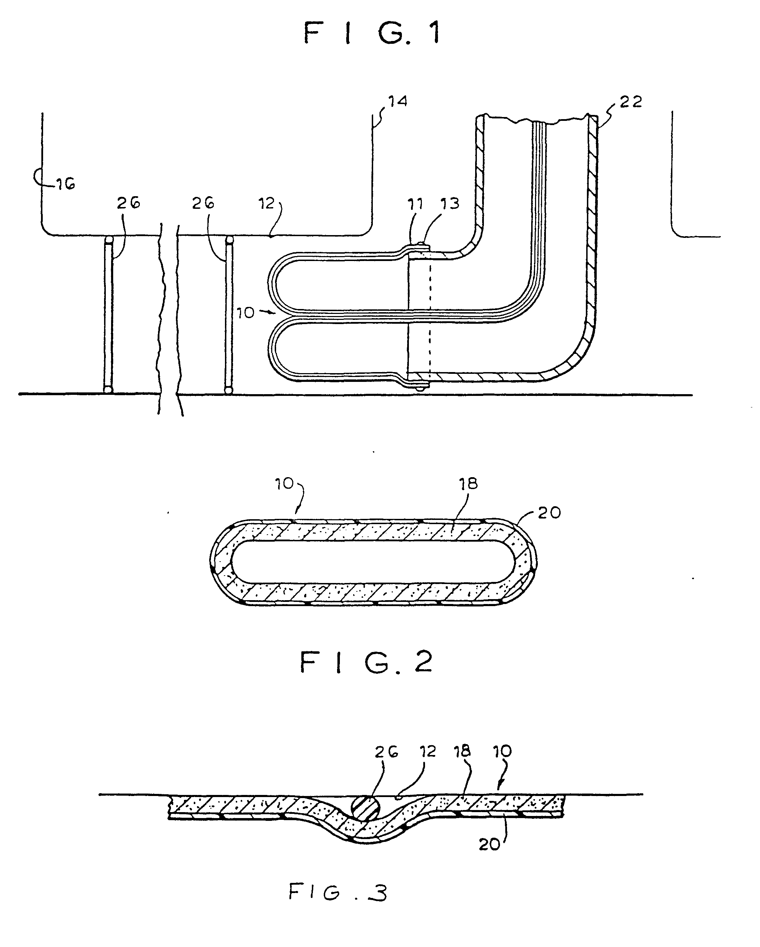

Fig. 1 discloses diagrammatically how a lining, generally designated 10, is applied to an underground pipeline 12 between two manholes 14 and 16.

The lining 10 is in the form of a tube formed of a flexible material of the construction shown basically in Fig. 2 comprising, prior to insertion in the pipeline 12, an inner felt or other resin-absorbent material 18 surrounded by a fluid-impermeable membrane 20 normally bonded to the felt layer 18 and usually constituted by a synthetic plastic film. The felt layer 18 is impregnated with a suitable curable synthetic resin which makes the lining of considerable weight while still flexible. To insert the lining 10 into the pipe 12 a leading end 11 of the lining 10 is inserted through a feed elbow 22 and the leading end 11 is turned back upon itself and fixed to the lower end of the feed elbow, as at 13. Water or other fluid is then forced into the feed elbow 22 which causes the lining tube 10 to evert into and along the interior of the pipe 12. As a result the resin-impregnated felt layer 18 becomes the outer layer while the fluid-impermeable layer 20 becomes the inner layer. The fluid which everts the lining tube 10 also exerts a radial pressure on the interior of the lining, expanding it and pressing it against the inner surface of the pipe 12. The lining is maintained in engagement with the pipe 12 until the resin which impregnates the felt layer 18 cures. That curing may be effected by any suitable means, such as through the use of heated water, induction heating, or high frequency ultrasonics. After the resin cure has been completed the fluid is removed from inside the lining 10, thus leaving a hard, rigid lining applied to the pipeline surface.

As has been indicated above, a difficulty which arises, in connection with this and other methods of pipe lining, is that the lining tends to shrink away from the inner surface of the pipe 12. This tendency is perhaps particularly marked when resin-impregnated layers are used. When that shrinkage occurs an annular gap will form between the lining and the pipe, and, particularly if the pipe carries gas, and especially gas under pressure, the gas can find its way into and along that annular gap and leak off.

In accordance with the present invention, this problem is overcome by providing sealing rings, generally designated 26, between the lining 10 and the pipe 12, those rings 26 being spaced at intervals along the length of the pipe. There is nothing particularly critical about the axial spacing between adjacent sealing rings 26, and that spacing will vary widely from installation to installation, depending upon the nature of the fluid carried by the pipe, the condition of the pipe, the distance between manholes or other transverse connections when the pipe is underground, the degree to which the fluid can be expected to penetrate the lining, and the like. Typically, however, they will be located on opposite sides of joints in the pipe connecting the pipe, for example, with branch pipes, because such joints are particularly susceptible to fluid leakage therethrough.

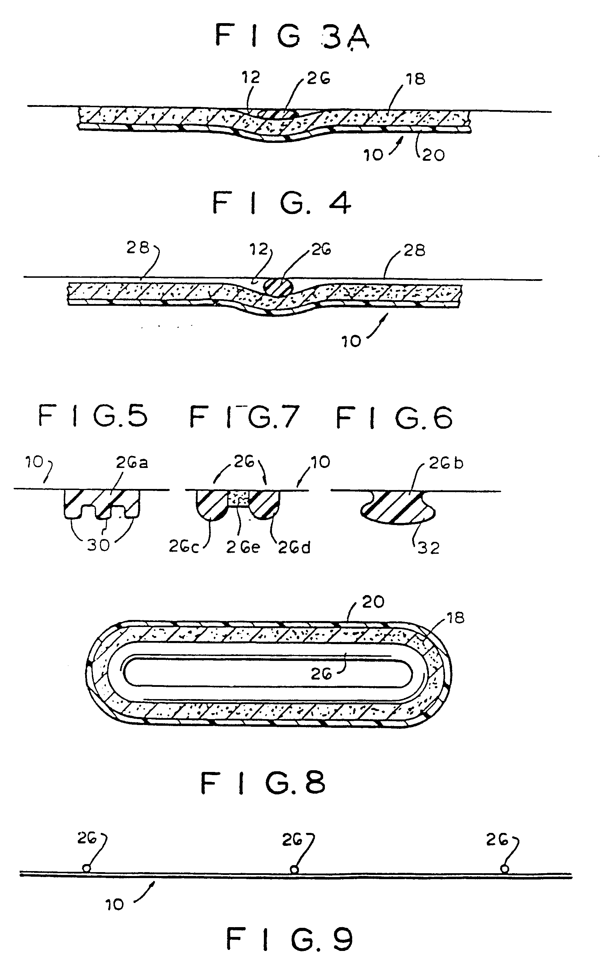

One typical sealing ring 26 is shown in Figs. 3, 3A and 4. It comprises ring of resilient material of circular cross-section. Natural or synthetic rubber or comparable plastics are suitable for use, with the particular material employed being selected in the light of the condition, to which it will be subjected and the substances to which it will be exposed in use. As shown in Fig. 1, the sealing rings are placed in position inside the pipe 12 prior to the insertion and cure of the lining 10. Hence, as diagrammatically illustrated in Fig. 3, when the lining 10 is initially inserted the sealing ring 26 will be interposed between the felt layer 18 and the pipe 12, and as pressure is applied inside the lining 10 to force it against the inner surface of the pipe the sealing ring 26 will, as diagrammatically illustrated in Fig. 3A, become compressed to a substantial degree.

After the resin in the layer 18 has cured, and if the lining 10 then tends to shrink and separate somewhat from the inner surface of the pipe 12, Fig. 4 diagrammatically indicates the relationship of the parts. The shrinkage of the lining lo from the pipe 12 has produced an annular gap 28 between the lining 10 and the pipe 12, and the sealing ring 26 will have expanded somewhat from its extremely compressed condition shown in Fig. 3A, but the ring 26 will still be compressed compared to its normal condition shown in Fig. 3. Thus each sealing ring 26 provides a circumferential seal between the lining 10 and the pipe 12, so that any fluid which may make its way into a given annular gap 28 cannot travel along the length of the pipe 12, but will be confined between a pair of adjacent sealing rings 26.

Figs. 5 and 6 illustrate typical alternative cross-sectional shapes for sealing rings 26a and 26b respectively. The ring 26a has ribs 30 which may preferably define a labyrinth over the radially inner surface of the ring. The ring 26b has a pre-flattened section 32 which provides a wide sealing surface engagement. Where even wider lining-pipe sealing surfaces are desired, and as illustrated in Fig. 7, the sealing ring 26 may be defined by two adjacent ring elements 26c and 26d spaced from one another by a small distance, for example one-half inch (12,7 mm), with the space between them being filled by a grout or other mastic material 26e, so that when the sealing ring assembly 26 is pressed against the inner surface of the pipe the ring elements 26c and 26d will compress until the grout or other mastic material 26e firmly engages the inner surface of the pipe, thus producing a sealing engagement over a greater area than is feasible with a single sealing ring 26.

It is not necessary that the sealing rings 26 be positioned within the pipe 12 before the lining 10 is inserted. The sealing rings 26 may be made a part of the lining tube 10 before that tube is inserted, the sealing rings 26 then moving into position along the length of the pipe 12 as the tube 10 is inserted. To that end the rings 26 may be adhesively secured to the original inner tube surface of the impregnated felt layer 18, as illustrated in Figs. 7 and 8.

## Claims

1. In combination, a given length of pipe, and a lining in said pipe extending therein for substantially said length, characterised in that at least one a sealing ring of compressable material is compressed between and sealingly engaged said pipe and said lining, whereby an annular gap between said pipe and said lining is axially interrupted.

2. The combination of Claim 1, in which said lining is rigid.

3. The combination of either of Claims 1 or 2, in which said ring is located at a point intermediate the length of said pipe.

4. The combination of either of Claims 1 or 2, in which a plurality of said rings are spaced from one another along said length.

5. The combination of either of Claims 1 or 2, in which said ring is formed of a material capable of becoming compressed when pressure is applied thereto and of expanding when some of said pressure is released.

6. The combination of either of Claims 1 or 2, in which said ring is formed of a material capable of becoming compressed when pressure is applied thereto and of expanding when some of said pressure is released, and in which said ring is located at a point intermediate the length of said pipe.

7. The combination of either of Claims 1 or 2, in which said ring is formed of a material capable of becoming compressed when pressure is applied thereto and of expanding when some of said pressure is released, and in which a plurality of said rings are spaced from one another along said length.

8. The combination of either of Claims 1 or 2, in which said ring has a cross-section with a generally arcuate outer surface.

9. The combination of either of Claims 1 or 2, in which said ring has a cross-section provided with outwardly-extended ribs which engage at least one of said pipe and said lining.

10. The combination of either of Claims 1 or 2, in which said ring comprises two ring elements slightly spaced from one another along the length of the lining, and in which a mastic material is received between said ring elements, said mastic material sealingly engaging said pipe between said sealing ring elements when said elements sealingly engage said pipe.

11. A lining for a pipe, said lining comprising a generally tubular body of extended length designed to be inserted into a pipe for lining purposes, characterised in that said body carries, spaced along the length thereof, a plurality of sealing rings of compressible material, said rings extending around said body substantially at right angles to the axis thereof and extending radially from said body.

12. The method of lining a given length of pipe which comprises:

(a) locating at lease one sealing ring of compressible material inside said pipe so as to extend around the interior of said pipe substantially at right angles to the

axis thereof;

(b) positioning a flexible liner inside said pipe length and inside said sealing ring;

(c) expanding said liner toward the interior of said pipe length, thereby compressing said sealing ring between itself and said pipe interior; and

(d) causing said flexible liner to become more rigid,

whereby, if said liner moves radially away from said pipe in the vicinity of said sealing ring, said sealing ring will expand while maintaining a seal between said pipe and said liner so as to axially interrupt any annular gap between said pipe and the said liner.

13. The method of Claim 12, in which step (a) comprises locating a plurality of said sealing rings within said pipe spaced from one another along the length of said pipe.

14. The method of either of Claims 12 or 13, in which step (a) is carried out before step (b) is carried out.

15. The method of either of Claims 12 or 13, in which steps (a) and (b) are carried out substantially simultaneously.

16. The method of either of Claims 12 or 13, in which steps (a) and (b) are carried out substantially simultaneously by pre-positioning said sealing rings on said liner before said liner is positioned inside said pipe.

**Patentansprüche**

1. In Kombination: eine bestimmte Rohrlänge und eine Auskleidung in dem Rohr, die sich darin über im wesentlichen die Länge erstreckt, dadurch gekennzeichnet, daß mindestens ein Dichtring aus komprimierbarem Material zwischen dem Rohr und der Auskleidung komprimiert ist und dichtend daran anliegt, wodurch ein Ringspalt zwischen dem Rohr und der Auskleidung in Axialrichtung unterbrochen ist.

2. Die Kombination nach Anspruch 1 bei der die Auskleidung starr ist.

3. Die Kombination nach Anspruch 1 oder 2, bei der der Ring an einer Stelle innerhalb der Rohrlänge angeordnet ist.

4. Die Kombination nach einem der Ansprüche 3 oder 2, bei der eine Vielzahl der Ringe mit Abstand voneinander in der Länge angeordnet ist.

5. Die Kombination entweder nach Anspruch 1 oder 2, bei der der Ring aus einem Material gebildet ist, dass dazu befähigt ist, beim Anlegen von Druck komprimiert zu werden, und zu expandieren, wenn etwas von dem Druck entlastet wird.

6. Die Kombination nach Anspruch 1 oder 2, bei der der Ring aus einem Material gebildet ist, das befähigt ist, bei Anlegen von Druck komprimiert zu werden, und zu expandieren, wenn etwas von dem Druck entlastet wird, und bei dem der Ring an einer stelle innerhalb der Rohrlänge angeordnet ist.

7. Die Kombination nach einem der Ansprüche 1 oder 2, bei der der Ring aus einem Material gebildet ist, das befähigt ist, bei Anlagen von Druck komprimiert zu werden, und zu expandieren, wenn etwas von dem Druck entlastet wird, und bei der eine Vielzahl der Ringe mit Abstand voneinander in der Länge angeordnet ist.

8. Die Kombination nach einem der Ansprüche 1 oder 2, bei der der Ring einen Querschnitt mit einer allgemein gekrümmten Außenfläche besitzt.

9. Die Kombination nach einem der Ansprüche 1 oder 2, bei der der Ring einen Querschnitt mit nach außen abstehenden Lippen besitzt, welche mindestens an einem der Teile, Rohr oder Auskleidung, anliegen.

10. Die Kombination nach einem der Ansprüche 1 oder 2, bei der der Ring zwei Ringelemente mit kleinem Abstand voneinander in Längsrichtung der Auskleidung umfaßt, und bei der ein Ausstreichmaterial zwischen den Ringelementen aufgenommen ist, wobei das Ausstreichmaterial dichtend an dem Rohr zwischen den Dichtringelementen anliegt, wenn die Elemente dichtend an dem Rohr anliegen.

11. Auskleidung für ein Rohr, wobei die Auskleidung einen allgemein schlauchförmigen Körper ausgedehnter Lange umfaßt, zum Einsetzen in ein Rohr für Auskleidungszwecke ausgelegt, dadurch gekennzeichnet, daß der Körper mit Abständen in seiner Längsrichtung eine Vielzahl von Dichtringen aus kompressiblem Material trägt, wobei die Ringe sich um den Körper im wesentlichen rechtwinklig zu seiner Achse erstrecken und radial von dem Körper abstehen.

12. Verfahren zum Auskleiden einer bestimmten Rohrlänge, bei dem:

(a) mindestens ein Dichtring aus kompressiblem Material in dem Rohr so angeordnet wird, daß er sich um den Innenraum des Rohres im wesentlichen rechtwinklig zu dessen Achse erstreckt;

(b) eine flexible Auskleidung in die Rohrlänge und innerhalb des Dichtrings eingesetzt wird;

(c) die Auskleidung zu dem Inneren der Rohrlänge hin gedehnt wird und dadurch dar Dichtring zwischen ihr und dem Rohrinneren komprimiert wird; und

(d) die flexible Auskleidung veranlaßt wird, starrer zu werden, wodurch, falls die Auskleidung sich in der Nähe des Dichtrings radial von dem Rohr wegbewegt, der Dichtring sich dehnen wird unter Aufrechterhaltung einer Abdichtung zwischen dem Rohr und der Auskleidung, um so einen etwaigen Ringspalt zwischen dem Rohr und der Auskleidung in Axialrichtung zu unterbrechen.

13. Verfahren nach Anspruch 12, bei welchem im Schritt (a) eine Vielzahl der Dichtringe innerhalb des Rohres mit Abstand voneinander in Längsrichtung des Rohren angeordnet werden.

14. Verfahren nach Anspruch 12 oder 13, bei dem Schritt (a) ausgeführt wird, bevor Schritt (b) ausgeführt wird.

15. Verfahren nach Anspruch 12 oder 13, bei dem Schritte (a) und (b) im wesentlichen gleichzeitig ausgeführt werden.

16. Verfahren nach Anspruch 12 oder 13, bei welchem Schritte (a) und (b) im wesentlichen gleichzeitig ausgeführt werden durch vorheriges Anbringen der Dichtringe an der Auskleidung, bevor die Auskleidung in das Rohr eingefürt wird.

**Revendications**

1. En combinaison une section de tuyau d'une longueur déterminée et une doublure disposée à l'intérieur de ce tuyau sur sensiblement la longueur de ce dernier, caractérisées en ce que au moins un joint annulaire d'étanchéité en matériau compressible est comprimé en contact d'étanchéité entre ledit tuyau et ladite doublure, grâce à quoi tout espace annulaire intersticiel entre le tuyau et la doublure se trouve ainsi axialement interrompu.

2. La combinaison selon la revendication 1 dans laquelle ladite doublure est de nature rigide.

3. La combinaison selon l'une ou l'autre des revendications 1 ou 2 dans laquelle ledit joint annulaire est disposé à un point intermédiaire le long dudit tuyau.

4. La combinaison selon l'une ou l'autre des revendications 1 ou 2 dans laquelle une pluralité desdits joints annulaires sont disposés à intervalle l'un de l'autre le long de la longueur du tuyau.

5. La combinaison selon l'une ou l'autre des revendications 1 ou 2 dans laquelle ledit joint annulaire est constitué d'un matériau susceptible d'être comprimé lorsqu'une pression lui est appliquée et de s'expanser lorsque cette pression est partiellement relâchée.

6. La combinaison selon l'une ou l'autre des revendications ou 2 dans laquelle ledit joint annulaire est formé d'un matériau susceptible d'être comprimé lorsqu'une pression lui est appliquée et de s'expanser lorsque cette pression est au moins partiellement relâchée et dons laquelle ladit joint annulaire est disposé un point intermédiaire le long dudit tuyau.

7. La combinaison selon l'une ou l'autre des revendications 1 ou 2 dans laquelle ledit joint annulaire est formé d'un matériau susceptible d'être comprimé lorsqu'une pression lui est appliquée et de s'expanser lorsque ladite pression est au moins partiellement relâchée et dans laquelle une pluralité desdits joints est disposée de place on place le long dudit tuyau.

8. La combinaision selon l'une ou l'autre des revendications 1 ou 2 dans laquelle ledit joint a un profil on coupe comportant une surface extérieure de forme générale arquée.

9. La combinasion selon l'une ou l'autre des revendications 1 ou 2 dans laquelle ledit joint annulaire a un profil en coupe comportant des nervures s'étendant vers l'extérieur et propre à venir au contact d'au moins l'un dos deux éléments constitués par le tuyau et la doublure.

10. La combinaison l'une des revendications 1 ou 2 dans laquelle le joint annulaire comporte deux éléments annulaires légèrement espacés l'un de l'autre sur la longueur de la doublure et dans laquelle un matériau formant mastic est inséré entre les deux éléments annulaires ce matériau formant mastic venant au contact d'étanchéité de la surface dudit tuyau entre lesdits éléments annulaires lorsque les éléments sont amenés en contact d'étanchéité avec ledit tuyau.

11. Doublure pour un tuyau, ladite doublure comportant un corps de forme générale tubulaire s'étendant sur une certaine longueur pour être inséré dans un tuyau on vue de doubler ce dernier et caractérisée en ce que ledit corps tubulaire comporte, espacés le long de ce dernier une pluralité de joints d'étanchéité annulaires en matériau compressible, lesdits joints annulaires s'étendant autour dudit corps tubulaire sensiblement dans un plan perpendiculaire à l'axe de ce dernier et s'étendant radialement à partir de ce corps.

12. Procédé de revêtement d'une longueur déterminée de tuyau qui comporte les étapes suivantes:

a) on dispose au moins un joint annulaire d'étanchéité en matériau compressible à l'intérieur dudit tuyau de façon à ce qu'il s'étende autour de l'intérieur dudit tuyau sensiblement dans un plan perpendiculaire à l'axe longitudinal de ce dernier;

b) on positionne une doublure flexible à l'intérieur dudit tuyau sur la longueur de ce dernier et à l'intérieur desdits joints annulaires d'étanchéité;

c) on provoque l'expansion de cette doublure vers la paroi intérieure dudit tuyau sur la longueur de ce dernier en compressant ainsi lesdits joints annulaires d'étanchéité entre la doublure et la paroi intérieure du tuyau;

d) on provoque la rigidification de la doublure flexible, grâce à quoi, si la doublure s'écarte radialement de la paroi intérieure du tuyau, à proximité desdits joints annulaires d'étanchéité, ces derniers sont expansés tout en maintenant un joint d'étanchéité entre ledit tuyau et ladite doublure de façon à interrompre axialement tout espace annulaire intersticiel entre le tuyau et la doublure.

13. Procédé selon la revendication 12 caractérisée en outre en ce que l'étape a) comprend la mise en place d'une pluralité de joints annulaires d'étanchéité à l'intérieur dudit tuyau, les joints étant espacés l'un par rapport à l'autre le long dudit tuyau.

14. Procédé selon l'une des revendications 12 ou 13 dans lequel l'étape a) est accomplie avant la mise en oeuvre de l'étape b).

15. Procédé selon l'une des revendications 12 ou 13 dans lequel les étapes a) et b) sont accomplies et mises en oeuvre sensiblement simultanément.

16. Procédé selon l'une des revendications 12 ou 13 dans lequel les étapes a) et b) sont accomplies sensiblement simultanément en positionnant préalablement lesdits joints annulaires d'étanchéité sur la surface de la doublure avant l'insertion de cette doublure à l'intérieur du tuyau.

# F I G. 1

# F I G. 2

# F I G. 3

EP 0 217 189 B1

## F I G 3A

## F I G. 4

## F I G.5  F I G.7  F I G.6

## F I G.8

## F I G.9

3